# EUROPÄISCHE PATENTANMELDUNG

(11) **EP 4 477 047 A1**
(43) Veröffentlichungstag der Anmeldung: **18.12.2024**
(21) Anmeldenummer: 24168718.5
(22) Anmeldetag: 05.04.2024
(51) Int. Cl.: A01D 34/835

(54) **MULCHEINHEIT UND DAMIT AUSGESTATTETE LANDMASCHINE**

(30) Priorität: 15.06.2023 DE 102023115603
(71) Anmelder: CLAAS Selbstfahrende Erntemaschinen GmbH, 33428 Harsewinkel (DE)
(72) Erfinder: Waibel, Jacques, 88339 Bad Waldsee (DE); Fischer, Josef, 88400 Biberach (DE); Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Reinhardt, Martin, 88367 Hohentengen (DE); Klein-Helmkamp, Marwin, 49565 Bramsche (DE)
(74) Vertreter: CLAAS Gruppe

(57) **Zusammenfassung**

Eine Mulcheinheit (7) zum Zerkleinern von beim Abernten eines Feldes auf dem Feld zurückgelassenen Stoppeln (6), zur Anbringung an einer selbstfahrenden Landmaschine (1), oder eine Landmaschine (1) mit einer Mulcheinheit (7) zum Zerkleinern von auf einem Feld zurückgelassenen Stoppeln (6) umfasst ein Kamerasystem mit wenigstens einer Kamera (15', 15"), die angeordnet ist, um die Arbeitsqualität der Mulcheinheit (7) zu überwachen. Eine Steuerung (18) der Mulcheinheit (7) ist mit dem Kamerasystem verbunden, um von der wenigstens einen Kamera (15', 15") erzeugte Bilder zu empfangen und anhand einer Analyse der Bilder Arbeitsparameter der Mulcheinheit (7) im Betrieb nachzuregeln.

## Beschreibung

Die vorliegende Erfindung betrifft eine Mulcheinheit, die zum Zerkleinern von beim Abernten eines Feldes auf dem Feld zurückgelassenen Stoppeln, an eine selbstfahrende Landmaschine gekoppelt werden kann, sowie eine selbstfahrende Landmaschine, die mit einer Mulcheinheit zum Zerkleinern der Stoppeln ausgestattet ist.

Aus EP 4 140 283 A1 ist ein Feldhäcksler mit einem höhenverstellbaren Maisgebiss bekannt, bei dem eine Bildverarbeitungseinheit eingerichtet ist, die Länge von von dem Maisgebiss auf dem Feld zurückgelassenen Stoppeln zu beurteilen, und eine Steuereinheit eingerichtet ist, die Arbeitshöhe des Maisgebisses anhand dieser Stoppellänge zu korrigieren. Die Arbeitshöhe sollte groß genug sein, um sicherzustellen, dass trotz eventueller Unebenheiten des Bodens Steine oder Erde nicht in den Erntevorsatz gelangen. Die Länge der am Boden verbleibenden Stoppeln kann daher groß genug sein, um Schädlingen Nahrung und Unterschlupf für eine Überwinterung zu bieten.

Um der Überwinterung von Schädlingen wirksam vorzubeugen, sollten die am Boden verbleibenden Pflanzenreste kleinteiliger sein als die von dem Erntevorsatz zurückgelassenen Stoppeln. DE 10 2019 128 214 A1 schlägt daher eine Mulcheinheit mit einer Mulchwalze zum Zerkleinern der Stoppeln und einer Bodenanpassungswalze vor, die, indem sie der Bodenkontur folgt, die Mulchwalze in einem Abstand vom Boden führt, der zumindest so lange halbwegs konstant ist, wie die Eigenschaften des Bodens sich nicht ändern.

Wenn allerdings der Boden, auf dem sich die Bodenanpassungswalze bewegt, fester wird und die Bodenanpassungswalze weniger stark einsinkt, dann nimmt auch der Bodenabstand der Mulchwalze zu, und die bodennahen Reste der Stoppeln, die von der Mulchwalze nicht erfasst werden, werden länger. Umgekehrt führt weicher werdender Boden dazu, dass der Abstand der Mulchwalze geringer wird und eventuell sogar Bodenkontakt bekommt, was hohen Energieverbrauch und Verschleiß zur Folge hat.

Wenn ein Benutzer der Mulcheinheit das Ergebnis des Mulchvorgangs nicht laufend überwacht und bei Bedarf die Einstellungen der Mulcheinheit korrigiert, besteht die Gefahr, dass das Mulchen unnötig hohe Kosten verursacht oder die gewünschte Wirkung, Schädlingsbefall im Folgejahr vorzubeugen, verfehlt.

Eine Aufgabe der Erfindung ist, eine Mulcheinheit oder eine selbstfahrende Landmaschine mit Mulcheinheit zu schaffen, die ein wirtschaftliches und ergebnissicheres Mulchen ermöglichen.

Die Aufgabe wird einem Aspekt der Erfindung zufolge gelöst, indem bei einem Mulcheinheit zum Zerkleinern von beim Abernten eines Feldes auf dem Feld zurückgelassenen Stoppeln, zur Anbringung an einer selbstfahrenden Landmaschine, oder bei einer Landmaschine mit einer Mulcheinheit zum Zerkleinern von auf einem Feld zurückgelassenen Stoppeln, ein Kamerasystem angeordnet ist, um die Arbeitsqualität der Mulcheinheit zu überwachen, und dass eine Steuerung der Mulcheinheit mit dem Kamerasystem verbunden ist, um von dem Kamerasystem erzeugte Bilder zu empfangen und anhand einer Analyse der Bilder Arbeitsparameter der Mulcheinheit im Betrieb nachzuregeln.

Die Kameraeinheit kann Bestandteil der Mulcheinheit oder, im Falle der Landmaschine, an einem von der Mulcheinheit getrennten Teil der Landmaschine angebracht sein. Letzteres kann insbesondere zweckmäßig sein, um mit dem Kamerasystem Bereiche der Feldoberfläche zu überwachen, die von der Mulcheinheit aus nicht sichtbar sind, oder eine ursprünglich für andere Zwecke an der Landmaschine vorgesehene Kamera auch zum Steuern der Mulcheinheit nutzbar zu machen.

Vorzugsweise ist das Kamerasystem ausgerichtet ist, um Bilder von von der Mulcheinheit bearbeiteten Stoppeln, insbesondere auf einer in Fahrtrichtung der Landmaschine hinter der Mulcheinheit gelegenen Fläche, zu erzeugen.

Wenn die Mulcheinheit - unmittelbar oder mittelbar über einen Erntevorsatz - vorn an einer Karosserie der Landmaschine montiert ist und wenigstens im Ernteeinsatz seitlich über die Karosserie überstehende Segmente umfasst, kann wenigstens eine Kamera des Kamerasystems auf eine durch eine seitliche Flanke der Karosserie und eine Hinterkante eines der Segmente begrenzte Fläche ausgerichtet sein. So können die Auswirkungen einer an der Mulcheinheit vorgenommenen Verstellung mit der geringstmöglichen Verzögerung und insbesondere schneller als mit einer eventuell am Heck der Landmaschine angebrachten, den Raum hinter dem Heck überwachenden Rückwärtsfahrkamera erfasst werden.

Die Analyse der Bilder durch die Steuerung umfasst vorzugsweise einen oder mehrere der folgenden Aspekte:
- Beurteilung der Höhe von Reststoppeln nach Bearbeitung durch die Mulcheinheit; so kann entschieden werden, ob diese in einem Sollbereich liegt oder ob eine Lagekorrektur der Mulcheinheit erforderlich ist;
- Identifizieren von untersten Knoten von Stoppeln in den Bildern. Insbesondere bei Maispflanzen ist der unterste Knoten der Teil des Halms mit dem größten Durchmesser und ist dadurch, dass er knapp über dem Boden liegt, für die Mulcheinheit an sich zugänglich. Wenn es der Mulcheinheit gelingt, diesen untersten Knoten zu zerschlagen, kann davon ausgegangen werden, dass danach noch verbleibende Reste der Pflanze zu kleinteilig sind, um als Überwinterungsquartier für Schädlinge dienen zu können. Wenn folglich auf der von der Mulcheinheit bearbeiteten Fläche noch unterste Knoten erkennbar sind, so kann deren Zahl oder Dichte als Maß für die Qualität des Mulchvorgangs herangezogen werden; sei es, um nach Abschluss des Mulchens zu entscheiden, ob weitere Maßnahmen zur Schädlingsvorbeugung wünschenswert sind, sei es, um während des Mulchens Arbeitsparameter der Mulcheinheit wie etwa deren Arbeitshöhe anzupassen,

- Beurteilen, ob die Mulcheinheit im Boden arbeitet. Wenn durch das Mulchen die Bodenoberfläche aufgerissen wird, ist dies meist deutlich in den Bildern des Kamerasystems zu erkennen; in diesem Fall sollte die Arbeitshöhe angehoben werden, um unnötigen Verschleiß und Energieverbrauch zu vermeiden;
- Beurteilen des Steinbesatzes einer bearbeiteten Fläche. Je stärker dieser ist, umso wichtiger ist es zu verhindern, dass die Mulcheinheit im Boden arbeitet; daher kann der Steinbesatz dafür maßgeblich sein, wie stark oder wie schnell die Steuerung auf einen Bodeneingriff oder eine niedrige Schlaghöhe reagiert. Hoher Steinbesatz kann auch auf starke Bodenerosion hindeuten; deswegen kann es sinnvoll sein, Daten zum Steinbesatz für ein Feld zu sammeln, um anhand der gesammelten Daten über eventuelle Bodenschutzmaßnahmen oder einen Fruchtwechsel zu entscheiden;
- Beurteilen des Auftretens oder der Häufigkeit liegender Pflanzen. Wenn diese bereits vor der Ernte umgefallen sind und deswegen vom Erntevorsatz oder der Mulcheinheit nicht erfasst werden, werden sie von dem Kamerasystem erfasst, wenn es auf eine Fläche hinter der Mulcheinheit ausgerichtet ist. Diese liegenden Pflanzen können Indiz für einen vorhandenen Schädlingsbefall und damit auch ausschlaggebend für die Bedeutung eines gründlichen und vollständigen Mulchens oder für die Entscheidung über über das Mulchen hinausgehende Schädlingsbekämpfungsmaßnahmen sein. Denkbar ist aber auch, dass nicht oder unzureichend zerkleinerte Pflanzen, die in der vom Kamerasystem überwachten Fläche sichtbar werden, auf eine unbefriedigende Funktion der Mulcheinheit hinweisen, so dass ihre Erfassung durch das Kamerasystem helfen kann, eine Fehlfunktion der Mulcheinheit zu erkennen und beheben;

- und/oder
- Erfassen der Eindringtiefe einer Stützrolle (9) der Mulcheinheit (7). Eine mittlere Eindringtiefe gibt Aufschluss über die Nachgiebigkeit des Bodens und kann herangezogen werden, um etwa den Auflagedruck der Mulcheinheit zu regeln. Aus einer Variabilität der Eindringtiefe können Schlüsse über die Bodenstruktur gezogen werden.

Ein anhand der Analyse nachgeregelter Arbeitsparameter kann insbesondere die Schlaghöhe der Mulcheinheit sein.

Wenn die Steuerung eingerichtet ist, die Arbeitshöhe anhand des Steinbesatzes und wenigstens einer anderen Einflussgröße, insbesondere einem der anderen oben genannten Aspekte, festzulegen, kann eine relative Gewichtung des Steinbesatzes im Verhältnis zu anderen die Arbeitshöhe beeinflussenden Messgrößen durch einen Benutzer wählbar sein. So kann der Benutzer selber festlegen, wieviel Abnutzung er im Interesse einer gründlichen Zerkleinerung der Stoppeln in Kauf zu nehmen bereit ist.

Wie bereits angesprochen, kann die Steuerung eingerichtet sein, Ergebnisse der Analyse der Bilder im Laufe eines Ernteeinsatzes zu sammeln und die gesammelten Ergebnisse oder einen von den gesammelten Ergebnissen abgeleiteten Parameter auszugeben,

Die Mulcheinheit kann wenigstens eine quer zur Fahrtrichtung orientierte drehangetriebene Welle umfassen, die mit radial abstehenden Mulchwerkzeugen wie etwa Messern, Hämmern oder dergleichen besetzt ist.

Mais wird typischerweise in Reihen angepflanzt, an denen die Landmaschine während des Mulchens entlangfahren muss. Um dem Fahrer der Landmaschine diese Aufgabe zu erleichtern oder ein autonomes Navigieren der Landmaschine zu ermöglichen, kann die Steuerung eingerichtet sein, Reihen von Stoppeln in den Bildern zu identifizieren und von der Position der Reihen abgeleitete Korrekturinformation an eine Lenkung der Landmaschine zu übermitteln.

Gegenstand der Erfindung ist ferner ein Computerprogramm-Produkt, das ausführbare Anweisungen umfasst, die, wenn sie von einem Computer ausgeführt werden, diesen befähigen, als Steuerung in einer Mulcheinheit oder Landmaschine wie oben beschrieben zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine erfindungsgemäße Landmaschine in einer Seitenansicht;
- Fig. 2: die Landmaschine in einer Draufsicht;
- Fig. 3: einen schematischen Schnitt durch eine Mulcheinheit der Landmaschine aus Fig. 1.

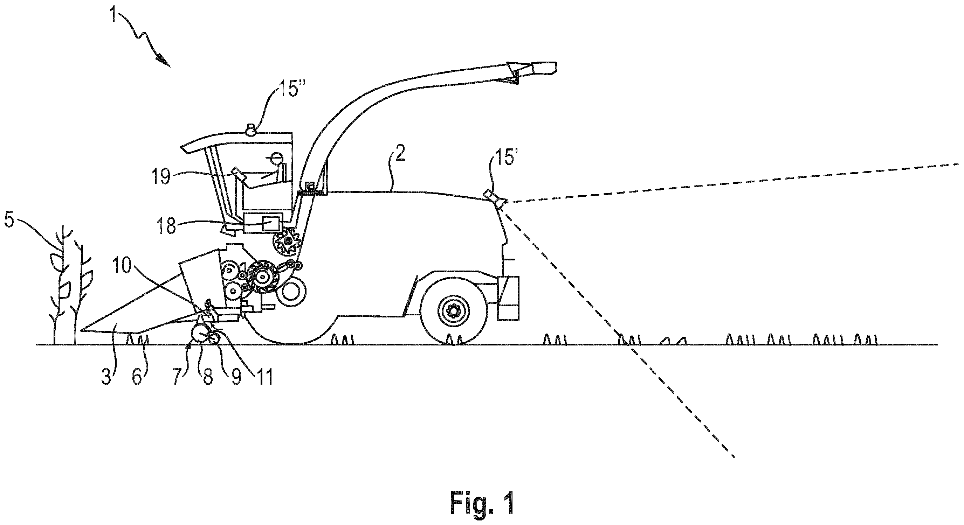

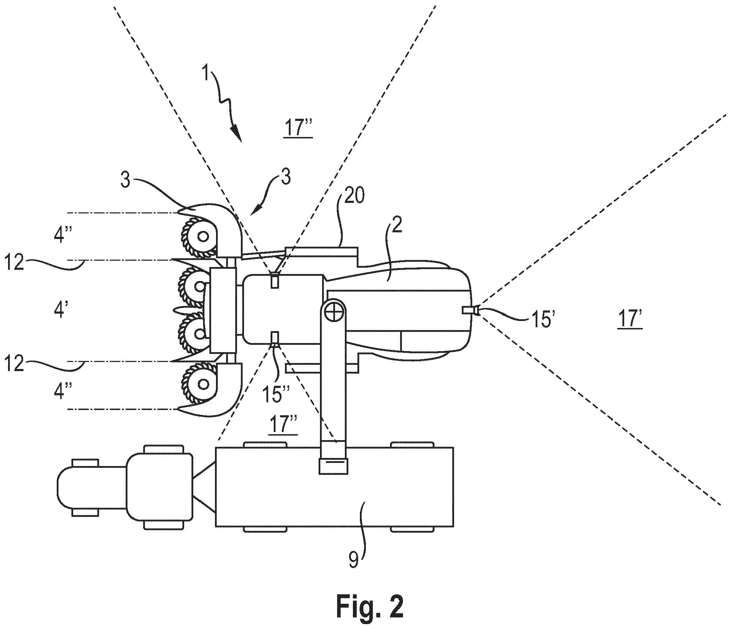

Fig. 1 und 2 zeigen in einer Seitenansicht und einer Draufsicht einen Feldhäcksler 1 als Beispiel einer Landmaschine, an der die Erfindung anwendbar ist. Der Feldhäcksler 1 hat eine starre Karosserie 2, an der ein Erntevorsatz 3, typischerweise ein Maisgebiss, höhenverstellbar angebracht ist. Der Erntevorsatz 3 kappt Halme 5 eines Pflanzenbestands auf einem zu beerntenden Feld, wobei Stoppeln 6 mit einer von der eingestellten Arbeitshöhe des Erntevorsatzes 3 abhängigen Länge auf dem Feld zurückbleiben. Die Arbeitshöhe ist typischerweise gerade groß genug gewählt, um sicherzustellen, dass Erdboden und Steine nicht vom Erntevorsatz 3 aufgenommen werden können.

Um diese Stoppeln 6 zu zerkleinern, ist unter dem Erntevorsatz 3 oder einem daran anschließenden vorderen Bereich der Karosserie 2 eine Mulcheinheit 7 montiert. Die Mulcheinheit 7 umfasst eine quer zur Fahrtrichtung langgestreckte Welle 8, die mit einer Vielzahl von radial abstehenden Mulchwerkzeugen besetzt ist und in Fig. 1 schematisch durch einen von den Mulchwerkzeugen bei der Drehung der Welle 8 beschriebenen Umkreis dargestellt ist, sowie Stützrollen 9, welche die Bodenkontur des Feldes abtasten. Wenn die Stützrollen 9 auf ebenem Untergrund ablaufen, entspricht der Abstand zwischen dem Umkreis und der Bodenoberfläche der Schlaghöhe der Mulcheinheit 7. Eine Gelenkverbindung 10 zwischen der Mulcheinheit 7 und der Karosserie 2 erlaubt es der Welle 8, einer durch ein unebenes Bodenprofil bedingten Vertikalbewegung der Stützrollen 9 zu folgen. Indem bei dieser Bewegung die Neigung einer durch die Achsen der Welle 8 und der Stützräder 9 verlaufenden Ebene 11 konstant gehalten wird, kann die Welle 8 dem Bodenprofil mit im Mittel gleichbleibendem, einstellbarem Abstand folgen. Die Neigung dieser Ebene 11 (und damit die Schlaghöhe der Mulcheinheit 7) und der von den Stützrollen 9 getragene Anteil am Gesamtgewicht der Mulcheinheit 7 sind mit Hilfe von nicht dargestellten Stellgliedern der Gelenkverbindung 10 einstellbar.

Wie in Fig. 2 zu erkennen, ist der Erntevorsatz 3 in ein zentrales Segment 4' und zwei seitliche Segmente 4" gegliedert. Das zentrale Segment 4` hat im Wesentlichen dieselbe Breite wie die Karosserie 2. Die seitlichen Segmente 4" sind entlang von in Längsrichtung des Feldhäckslers 1 verlaufenden Achsen 12 hochklappbar, um die Breite der Maschine auf ein für den Straßenverkehr zulässiges Maß zu reduzieren.

Die in Fig. 2 unter dem Erntevorsatz 3 verborgene Mulcheinheit 7 hat dieselbe Arbeitsbreite wie dieser und ist wie er in Segmente gegliedert, von denen die seitlichen um zu den Achsen 12 benachbarte Achsen hochklappbar sind.

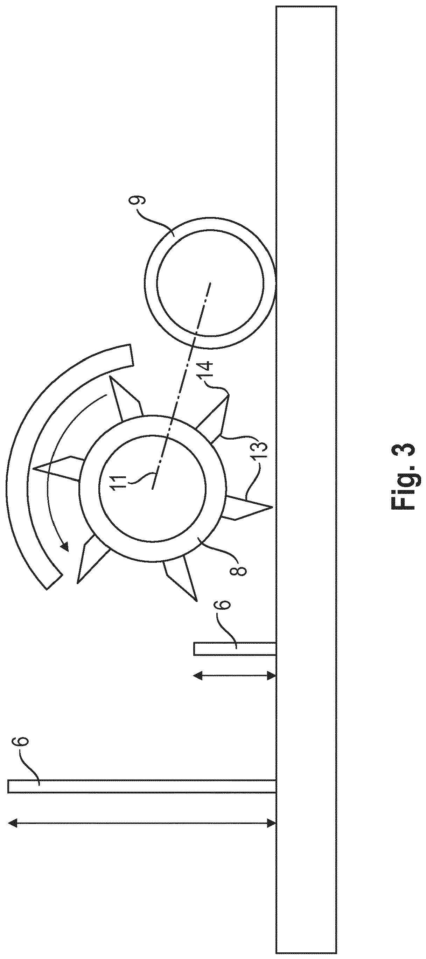

Fig. 3 zeigt einen schematischen Schnitt durch ein Segment der Mulcheinheit 7. Die von der Welle 8 abstehenden Mulchwerkzeuge, hier mit 13 bezeichnet, sind stab-, keil- oder blockförmig mit einer Schneidkante 14 an ihrem von der Welle 8 abgewandten Ende. Der Drehsinn der Welle 8 ist so gewählt, dass sich die Mulchwerkzeuge 13 an der Vorderseite der Mulcheinheit 7 abwärts bewegen und Stoppeln 6 mit einer Länge, die etwa dem Umlaufradius der Schneidkanten 14 entspricht, zunächst durch Schläge von oben zertrümmern und die Reste anschließend, soweit sie für die Mulchwerkzeuge 13 erreichbar sind, abreißen und nachhinten wegschleudern. Damit auf diese Weise ein Maisstoppel 6 bis einschließlich seines untersten Knotens zerstört wird, muss der Umkreis der rotierenden Mulchwerkzeuge 13 dicht an den Boden heranreichen. Um dies zu gewährleisten, darf der Anteil des Gewichts der Mulcheinheit 7, den die Stützräder 9 tragen, nicht zu gering sein; je größer dieser Anteil ist, umso stärker variiert jedoch die Einsinktiefe der Stützräder 9 mit der Nachgiebigkeit des Bodens. Um eine ausreichende Zerkleinerung der Stoppeln 6 zu gewährleisten, muss deshalb die Neigung der Ebene 12 und der von der Gelenkverbindung 10 getragene Gewichtsanteil laufend an die Nachgiebigkeit des Bodens angepasst werden.

Um die für eine solche Anpassung benötigten Daten zu gewinnen, sind am Dach einer Fahrerkabine 16 und am Heck der Karosserie 2 Kameras 15', 15" montiert, die jeweils einen von dem Erntevorsatz 3 und der Mulcheinheit 7 bearbeiteten Bereich 17', 17" der Feldoberfläche erfassen. Im Fall der Kameras 15" an der Fahrerkabine 16 liegt dieser Bereich 17" jeweils in einem Winkel zwischen einer hinteren Kante eines seitlichen Segments 3" des Erntevorsatzes und einer Flanke 20 der Karosserie 2; im Fall der Kamera 15' am Heck liegt der Bereich 17' hinter der Karosserie 2; deswegen kann die Kamera 15' auch als Sicherheitskamera zur Überwachung des Raums hinter der Karosserie 2 bei Rückwärtsfahrt dienen.

Eine elektronische Steuerung 18 (s. Fig. 1) ist mit den Kameras 15`, 15" und den Stellgliedern der gelenkigen Verbindung 10 verbunden, um in von den Kameras gelieferten Bildern intakt gebliebene oder nur unzureichend zerstörte Stoppeln zu identifizieren und zu zählen, und um zu erkennen, ob Teile der Feldoberfläche durch Kontakt mit den Mulchwerkzeugen 13 aufgerissen sind, und um anhand der Ergebnisse dieser Auswertung die Stellglieder anzusteuern. Indem durch diese Ansteuerung Schlaghöhe und Auflagedruck der Mulcheinheit 7 während eines Erntevorgangs laufend angepasst werden, kann eine befriedigende Zerkleinerungswirkung auch bei variabler Nachgiebigkeit und Ebenheit des Bodens erreicht werden.

Die Steuerung 18 kann alle Stoppeln als unzureichend zerstört bewerten, deren unterer Knoten in den Bildern noch als intakt und im Boden verwurzelt erkennbar ist; alternativ können aber auch aus den Bildern die Restlänge solcher Stoppeln nach der Bearbeitung durch die Mulcheinheit ermittelt werden und nur diejenigen Stoppeln als unzureichend zerkleinert bewertet werden, deren verbleibende Länge einen vorgegebenen Grenzwert überschreitet.

Eine Beurteilung der Restlänge der Stoppeln durch die Steuerung hat gegenüber dem Identifizieren von intakt gebliebenen unteren Knoten ferner den Vorteil, dass eine kritische Annäherung der Mulchwerkzeuge 13 an die Bodenoberfläche an der Restlänge der Stoppeln erkannt und korrigiert werden kann, ohne dass es vorher zu einem Bodenkontakt kommen muss; so können die Mulchwerkzeuge 13 sehr eng am Boden geführt und dennoch vor unnötigem Verschleiß geschützt werden.

Ein Aufreißen des Bodens durch die Mulchwerkzeuge 13 ist zwar an sich unerwünscht, weil diese dadurch stark beansprucht werden und unnötig Antriebsenergie verbraucht wird; er kann aber in gewissem Umfang toleriert werden, wenn dies nötig ist, um die Häufigkeit von unzureichend zerkleinerten Stoppeln auf ein vorgegebenes Maß zu drücken. Die Einstellung der Stellglieder der Verbindung 10 ist daher ein Kompromiss zwischen den einander zuwiderlaufenden Anforderungen, einerseits die Stoppeln möglichst vollständig zu zerkleinern und andererseits einen Bodenkontakt der Mulchwerkzeuge 13 zu vermeiden.

Wieweit die eine oder die andere dieser zuwiderlaufenden Anforderungen die Einstellung der Stellglieder beeinflusst, kann der Fahrer an einer Benutzerschnittstelle 19 einstellen; so kann er etwa auf einem Feld mit starkem Steinbelag eine Einstellung wählen, die einer Vermeidung des Bodenkontakts hohes Gewicht beimisst, da dieser zu einem starken Verschleiß der Mulcheinheit 7 führen würde; andererseits kann es sinnvoll sein, einer vollständigen Zerkleinerung der Stoppeln hohes Gewicht auf einem Feld beizumessen, von dem bekannt ist, dass dort in den Stoppeln überwinternde Schädlinge vorhanden sind.

Wenn die Steuerung 18 darauf abzielt, die Stoppeln nicht bis einschließlich des untersten Knotens zu zerstören, sondern einen Rest stehen lässt, um dessen Länge beurteilen zu können, dann kann als Nebenprodukt bei der Bildauswertung auch eine Information über die Position der Stoppeln in jedem Bereich 17', 17" erhalten werden. Indem die Steuereinheit den Abstand der Stoppeln von der seitlichen Flanke 20 ermittelt und an eine Lenkung des Feldhäckslers 1 übermittelt, kann der Feldhäcksler 1 automatisch exakt an den Reihen von Stoppeln 6 entlanggeführt werden.

Die Gesamtzahl von als unzureichend zerstört bewerteten Stoppeln oder die Anzahl solcher Stoppeln pro Einheit an bearbeiteter Ackerfläche kann am Ende eines Ernteeinsatzes, ggf. zusammen mit anderen abrechnungsrelevanten Parametern wie z.B. Arbeitszeit oder bearbeiteter Fläche, aus der Steuerung 18 ausgelesen werden, um etwa einem Lohnunternehmer, der die Ernte in fremdem Auftrag durchführt, als Nachweis für die Qualität der erbrachten Leistung zu dienen.

Einer Weiterbildung zufolge kann die Steuerung 18 eingerichtet sein, um anhand der Bilder den Steinbelag zu quantifizieren. Dies ermöglicht es der Steuerung 18, selbständig auf Flächen mit hohem Steinbelag Bodenkontakt stärker zu meiden als auf steinarmen Flächen.

Alternativ kann die Steuerung 18 zwar einen Messwert des Steinbelags auf der in einem Ernteeinsatz bearbeiteten Ackerfläche ermitteln, nutzt diesen jedoch nicht zur Steuerung von Schlaghöhe und Auflagedruck der Mulcheinheit 7 während dieses Ernteeinsatzes, sondern gibt diesen oder einen davon abgeleiteten Schätzwert des durch den Ernteeinsatz verursachten Verschleißes der Mulchwerkzeuge 13 nach Abschluss des Ernteeinsatzes aus. So kann etwa ein Lohnunternehmer, der die Ernte durchführt, seinem Auftraggeber die mit der Abwicklung des Auftrags verbundenen Kosten glaubhaft machen und abrechnen.

Die Steuerung kann ferner eingerichtet sein, in den Bildern Pflanzen zu erkennen, über die, weil sie bereits vor der Ernte umgestürzt sind, der Erntevorsatz 3 hinweggegangen ist, ohne sie zu erfassen, und die in der Folge, da sie großenteils unterhalb der Schlaghöhe der Mulcheinheit 7 liegen, auch von dieser nur unvollständig zerkleinert worden sind. Da häufig Schädlingsbefall Ursache für das Umstürzen ist, kann eine Angabe über die Zahl dieser Pflanzen oder über ihre Dichte auf dem Feld Aufschluss über eine mögliche Schädlingspopulation liefern und damit ein Kriterium dafür bieten, wieviel Gewicht eventuell einer vollständigen Zerkleinerung der Stoppeln, auch auf Kosten eines erhöhten Verschleißes, beizumessen ist. Diese Angabe kann bereits im laufenden Erntevorgang genutzt werden, um etwa die Schlaghöhe um so niedriger und/oder den Auflagedruck umso höher zu wählen, je häufiger umgestürzte Pflanzen sind; denkbar ist aber auch, sie lediglich zu erfassen, um auf ihrer Grundlage nach dem Erntevorgang zu entscheiden, ob und ggf. welche Maßnahmen zur Schädlingsbekämpfung nötig sind.

### Bezugszeichen

- 1: Feldhäcksler
- 2: Karosserie
- 3: Erntevorsatz
- 4: Segment
- 5: Halm
- 6: Stoppeln
- 7: Mulcheinheit
- 8: Welle
- 9: Stützrolle
- 10: Gelenkverbindung
- 11: Ebene
- 12: Achse
- 13: Mulchwerkzeug
- 14: Schneidkante
- 15: Kamera
- 16: Fahrerkabine
- 17: bearbeiteter Bereich
- 18: Steuerung
- 19: Benutzerschnittstelle
- 20: Flanke

## Patentansprüche

1. Mulcheinheit (7) zum Zerkleinern von beim Abernten eines Feldes auf dem Feld zurückgelassenen Stoppeln (6), zur Anbringung an einer selbstfahrenden Landmaschine (1), oder Landmaschine (1) mit einer Mulcheinheit (7) zum Zerkleinern von auf einem Feld zurückgelassenen Stoppeln (6), **dadurch gekennzeichnet, dass** ein Kamerasystem mit wenigstens einer Kamera (15', 15") angeordnet ist, um die Arbeitsqualität der Mulcheinheit (7) zu überwachen, und dass eine Steuerung (18) der Mulcheinheit (7) mit dem Kamerasystem verbunden ist, um von der wenigstens einen Kamera (15', 15") erzeugte Bilder zu empfangen und anhand einer Analyse der Bilder Arbeitsparameter der Mulcheinheit (7) im Betrieb nachzuregeln.

2. Mulcheinheit oder Landmaschine nach Anspruch 1, **dadurch gekennzeichnet, dass** das Kamerasystem ausgerichtet ist, um Bilder von von der Mulcheinheit bearbeiteten Stoppeln (6), insbesondere auf einer in Fahrtrichtung der Landmaschine (1) hinter der Mulcheinheit (7) gelegenen Fläche (17', 17"), zu erzeugen.

3. Mulcheinheit oder Landmaschine nach Anspruch 1 oder 2, **dadurch gekennzeichnet, dass** die Mulcheinheit (7) vorn an einer Karosserie (2) der Landmaschine (1) montiert ist und wenigstens im Ernteeinsatz seitlich über die Karosserie (2) überstehende Segmente (4") umfasst, und dass wenigstens eine Kamera (15") des Kamerasystems auf eine durch eine seitliche Flanke (20) der Karosserie (2) und eine Hinterkante eines der überstehenden Segmente (4") begrenzte Fläche (17") ausgerichtet ist.

4. Mulcheinheit oder Landmaschine nach einem der vorhergehenden Ansprüche, **dadurch gekennzeichnet, dass** die Analyse der Bilder durch die Steuerung (18) umfasst,
- die Höhe von Reststoppeln nach Bearbeitung durch die Mulcheinheit (7) zu beurteilen und/oder
- unterste Knoten von Stoppeln in den Bildern zu identifizieren, und/oder
- zu beurteilen, ob die Mulcheinheit (7) im Boden arbeitet, und/oder
- den Steinbesatz einer bearbeiteten Fläche zu beurteilen, und/oder
- liegende Pflanzen und/oder unzureichend zerkleinerte Pflanzen oder Pflanzenreste zu identifizieren, und/oder
- die Eindringtiefe einer Stützrolle (9) der Mulcheinheit (7) zu erfassen.

5. Mulcheinheit oder Landmaschine nach einem der vorhergehenden Ansprüche, **dadurch gekennzeichnet, dass** ein anhand der Analyse nachgeregelter Arbeitsparameter die Schlaghöhe und/oder der Auflagedruck der Mulcheinheit (7) ist.

6. Mulcheinheit oder Landmaschine nach Anspruch 5, **dadurch gekennzeichnet, dass** die Steuerung (18) eingerichtet ist, die Schlaghöhe anhand des Steinbesatzes und wenigstens einer anderen Einflussgröße festzulegen, und dass eine relative Gewichtung des Steinbesatzes bei der Festlegung der Schlaghöhe durch einen Benutzer wählbar ist.

7. Mulcheinheit oder Landmaschine nach einem der vorhergehenden Ansprüche, **dadurch gekennzeichnet, dass** die Steuerung (18) eingerichtet ist, Ergebnisse der Analyse der Bilder im Laufe eines Ernteeinsatzes zu sammeln und die gesammelten Ergebnisse oder einen von den gesammelten Ergebnissen abgeleiteten Parameter auszugeben.

8. Mulcheinheit oder Landmaschine nach einem der vorhergehenden Ansprüche, **dadurch gekennzeichnet, dass** die Mulcheinheit (7) wenigstens eine quer zur Fahrtrichtung orientierte drehangetriebene Welle (8) umfasst, die mit radial abstehenden Mulchwerkzeugen (13) besetzt ist.

9. Mulcheinheit oder Landmaschine nach einem der vorhergehenden Ansprüche, **dadurch gekennzeichnet, dass** die Steuerung (18) eingerichtet ist, Reihen von Stoppeln (6) in den Bildern zu identifizieren und von der Position der Reihen abgeleitete Korrekturinformation an eine Lenkung der Landmaschine (1) zu übermitteln.

10. Computerprogramm-Produkt, das ausführbare Anweisungen umfasst, die, wenn sie von einem Computer ausgeführt werden, diesen befähigen, als Steuerung in einer Mulcheinheit (7) oder Landmaschine (1) nach einem der Ansprüche 1 bis 9 zu arbeiten.
